(19) **Europäisches Patentamt / European Patent Office / Office européen des brevets**

(11) **EP 1 255 665 B1**

(12) **EUROPÄISCHE PATENTSCHRIFT**

(45) Veröffentlichungstag und Bekanntmachung des Hinweises auf die Patenterteilung:
**12.09.2007 Patentblatt 2007/37**

(21) Anmeldenummer: **01913777.7**

(22) Anmeldetag: **01.02.2001**

(51) Int Cl.:
***B60T 8/00*** *(2006.01)*

(86) Internationale Anmeldenummer:
**PCT/EP2001/001043**

(87) Internationale Veröffentlichungsnummer:
**WO 2001/056848 (09.08.2001 Gazette 2001/32)**

(54) **VERFAHREN UND SCHALTUNGSANORDNUNG ZUR STEUERUNG EINER BLOCKIERGESCHÜTZTEN BREMSANLAGE FÜR KRAFTFAHRZEUGE MIT ALLRADANTRIEB**

METHOD AND CIRCUIT FOR CONTROLLING AN ANTI-LOCK BRAKING SYSTEM FOR MOTOR VEHICLES HAVING ALL-WHEEL DRIVE

PROCEDE ET CIRCUIT DE COMMANDE D'UN SYSTEME DE FREINAGE A ANTIBLOCAGE DES ROUES POUR DES VEHICULES A QUATRE ROUES MOTRICES

(84) Benannte Vertragsstaaten:
**DE FR IT**

(30) Priorität: **04.02.2000 DE 10005071**
**25.01.2001 DE 10103467**

(43) Veröffentlichungstag der Anmeldung:
**13.11.2002 Patentblatt 2002/46**

(73) Patentinhaber: **Continental Teves AG & Co. oHG 60488 Frankfurt (DE)**

(72) Erfinder:
• **GRONAU, Ralph 35083 Wetter (DE)**
• **BURKHARD, Dieter 67714 Waldfischbach-Burgalben (DE)**

(56) Entgegenhaltungen:
**DE-A- 3 521 960      US-A- 5 797 664**

EP 1 255 665 B1

**Beschreibung**

Die Erfindung betrifft ein Verfahren zur Steuerung einer blockiergeschützten, für Kraftfahrzeuge mit Allradantrieb vorgesehenen Bremsanlage, bei dem das Drehverhalten der Fahrzeugräder darstellende elektrische Signale erzeugt werden, aus denen nach elektronischer Verarbeitung und logischer Verknüpfung Bremsdruck-Steuersignale abgeleitet werden, mit denen beim Auftreten einer Blockierneigung der Bremsdruck gesenkt oder konstant gehalten und zur gegebenen Zeit wieder erhöht wird, und bei dem als Regelkriterien der Radschlupf und die Radverzögerung und/oder die Radbeschleunigung ausgewertet werden, wobei die individuelle Radgeschwindigkeit mit einer Fahrzeugreferenzgeschwindigkeit verglichen wird, die unter Berücksichtigung des Drehverhaltens aller Räder gebildet wird und als Bezugsgröße für die Regelung des Bremsdruckes der einzelnen Räder dient, und wobei ferner bei einem Erkennen einer für eine Überdrehneigung typischen Raddrehverhalten ein geändertes Regelkonzept gestartet und bis zu einem bestimmten Zeitpunkt aufrechterhalten wird, indem für diese Zeitspanne der momentane Radschlupf als Regelkriterium außer acht bleibt und lediglich die Radbeschleunigung oder die Radverzögerung für die Bremsdruck-Regelung maßgebend wird.

Schaltungsanordnungen zur Durchführung des Verfahrens gehören ebenfalls zur Erfindung.

Eine derartiges Verfahren und eine derartige Schaltungsanordnung sind aus der DE 35 21 960 A1 bekannt.

Zur Regelung des Radschlupfes während eines Bremsvorganges mit einer blockiergeschützten, d.h. schlupfgeregelten Bremsanlage, ist grundsätzlich ein Messen der Geschwindigkeit und Geschwindigkeitsänderungen der geregelten Räder und ein Vergleich dieser Werte mit einer geeigneten Bezugsgröße erforderlich. Diese Bezugsgröße muß erkennen lassen, in welcher Weise der Bremsdruck, beispielsweise mit Hilfe einer elektronischen Regel- und Steuerschaltung, zu variieren ist, um ein Blockieren der Räder zu verhindern und dadurch die Fahrstabilität und Lenkfähigkeit zu erhalten, ohne den Bremsweg zu verlängern. Als Bezugsgröße dient bei bekannten schlupfgeregelten Bremsanlagen die sogenannte Fahrzeugreferenzgeschwindigkeit, die im Idealfall die Fahrzeuggeschwindigkeit unter Berücksichtigung des optimalen Radschlupfes nachbildet.

Die Bestimmung der tatsächlichen Fahrzeuggeschwindigkeit und der Fahrzeugreferenzgeschwindigkeit aus dem Drehverhalten der einzelnen Räder bereitet während eines Bremsvorganges Schwierigkeiten, weil an jedem Rad Schlupf auftritt und weil der Straßenzustand, die momentane Belastung der einzelnen Räder, Abweichungen infolge einer Kurvenfahrt usw. in die Messungen eingehen. Zur Minderung dieser Schwierigkeiten ist es bereits bekannt, die Fahrzeugreferenzgeschwindigkeit mit Hilfe eines auch während des Bremsvorganges freilaufenden, zusätzlichen oder zeitweise nicht gebremsten Rades zu ermitteln. Aus verschiedenen Gründen haben sich solche Maßnahmen nicht bewährt.

In der Praxis wird heutzutage die Fahrzeugreferenzgeschwindigkeit durch logische Verknüpfung des Drehverhaltens der einzelnen Räder festgelegt. Dabei folgt bei bekannten Schaltungen diese Referenzgröße, je nach Situation dem momentan schnellsten oder zweitschnellsten Rad, wobei zusätzlich eine Begrenzung auf die aus physikalischen Gründen maximal mögliche Verzögerung oder Beschleunigung des Fahrzeugs in den verschiedenen Situationen vorgenommen wird.

Bei Fahrzeugen mit nur einer angetriebenen Achse ist ein Überdrehen der angetriebenen Räder infolge des Motorträgheitsmomentes bei eingekuppeltem Motor und glatter Fahrbahn oder als Folge zu hoher Antriebskraft durch Vergleich mit dem Drehverhalten der nicht angetriebenen Räder in den meisten Situationen relativ leicht zu erkennen. Bei Fahrzeugen mit Allradantrieb, auf die sich die Erfindung bezieht, ergeben sich durch die Kopplung der Räder über den Antriebsstrang zusätzliche Schwierigkeiten. Auf Fahrbahnen mit niedrigem Reibwert kann nämlich, wenn die Unterschiede im Straßenmoment an den einzelnen Rädern kleiner als die Koppelmomente der Räder untereinander werden, synchron an allen Rädern ein langsam zunehmender positiver Schlupf entstehen, der allein aus der Messung des Raddrehverhaltens und logischen Verknüpfung der individuellen Radinformationen nicht von einer Beschleunigung des Fahrzeugs auf Straßen mit hohem Reibwert unterschieden werden kann. In diesem Fall kann die Fahrzeugreferenzgeschwindigkeit weit über die Fahrzeuggeschwindigkeit ansteigen. Bei einem nun eingeleiteten Bremsvorgang würde die Elektronik eine große Differenz zwischen der in Wirklichkeit stabil mit dem Fahrzeug laufenden Räder und der - überhöhten - Fahrzeugreferenzgeschwindigkeit feststellen und folglich einen Regelvorgang, d.h. eine Druckkonstanthaltung oder gar einen Druckabbau einleiten. Das Durchdrehen aller vier Räder führt also zu einer zu hochliegenden Fahrzeugreferenzgeschwindigkeit, mit der Folge, daß auch bei nachfolgend wieder stabil laufenden Rädern der Bremsdruck so lange zu stark abgebaut wird, bis die Referenzgröße wieder auf die Fahrzeuggeschwindigkeit abgesunken ist.

Auch außerhalb eines Bremsvorganges kann sich eine falsche Referenzgeschwindigkeit nachteilig auswirken; sie kann z.B. zu einer ungewollten Ventilbetätigung führen.

In der eingangs genannten DE 35 21 960 A1 wurde daher vorgeschlagen, die Überdrehneigung über den Anstieg der Fahrzeugreferenzgeschwindigkeit zu erkennen, beim Erkennen von Überdrehneigung und Erreichen vorgegebener Startbedingungen eine Umschaltung auf ein zweites Regelkonzept vorzunehmen und das zweite Regelkonzept bis zum Erreichen bestimmter Austrittsbedingungen beizubehalten.

Das bekannte Verfahren ist dabei so ausgelegt, daß bei großen positiven Fahrzeugreferenzgeschwindigkeitsgradienten eine Umschaltung auf das zweite Regelkonzept stattfindet, bei dem der momentane Radschlupf außer acht bleibt und lediglich die Radbeschleunigung oder die Radverzögerung für die Bremsdruck-Regelung maßgebend wird. Der Fahrzeugreferenzgeschwindigkeitsgradient von Antriebsschlupfregelsystemen kann bei Allradfahrzeugen bedingt durch die ASR-Regelung sehr klein sein, aber noch über dem Maximum liegen, welcher vom Reibwert zugelassen wird.

Der Erfindung liegt daher die Aufgabe zugrunde, die geschilderten Nachteile bekannter Schaltungsanordnungen zu überwinden und ein Verfahren zur Steuerung einer blockiergeschützten Bremsanlage zu entwickeln, mit der auch bei Allradantrieb unter allen Bedingungen ein Überdrehen der Räder erkannt und eine unerwünschte Bremsdruckabsenkung infolge einer solchen Situation ausgeschlossen wird.

Es hat sich nun herausgestellt, daß diese Aufgabe mit einem gattungsgemäßen Verfahren dadurch gelöst werden kann, daß das Erkennen und/oder Starten und/oder Aufrechterhalten des geänderten Regelkonzeptes nach Maßgabe eines ASR-Signals ausgewertet wird.

Bei der bisher bekannten Ermittlung der Kriterien für die Umschaltung in das zweite Regelkonzept, ist es bei allradgetriebenen Fahrzeugen mit Antriebsschlupfregelungen in manchen Situationen ein Problem, wenn sich alle Räder in der Antriebsschlupfregelung befinden, den Mindestwert des Anstiegs der Fahrzeugreferenzgeschwindigkeit zu ermitteln und/oder diesen Mindestwert während der vorgegebenen Mindestzeitspanne aufrecht zu erhalten, der zum Erreichen der vorgegebenen Startbedingungen erforderlich ist. Beispielsweise kann der Regler, genauer gesagt die Verknüpfungslogik, den Mindestwert nicht ermitteln oder über die Mindestzeitspanne aufrecht erhalten, da ein Durchdrehen der Rädern bei sehr niedrigem, homogenen Reibbeiwert zu einem Eingriff der Antriebsschlupfregelung führt, die einen Motoreingriff zur Folge hat, so daß die Beschleunigung der Räder und damit der Anstieg der Fahrzeugreferenzgeschwindigkeit, begrenzt wird. Mit dem erfindungsgemäßen Verfahren wird dagegen die Überdrehneigung der Räder in jeder Situation - auch bei einer Antriebsschlupfregelung - eindeutig erkannt und auch bei einem nach dieser Situation ausgelösten Bremsvorgang die Regelung nur dann aktiviert bzw. der Bremsdruck nur dann konstant gehalten oder verringert, wenn tatsächlich das jeweilige Rad instabil wird und zum Blockieren tendiert. Die volle Bremsfähigkeit des Fahrzeugs unter Einbeziehung der Blockierschutz-Regelung, die für die Lenkfähigkeit und Fahrstabilität sorgt, bleibt somit auch nach einer Antriebsschlupfregelung erhalten. Das erfindungsgemäße Verfahren berücksichtigt unter Beibehaltung des Eingangs beschriebenen Verfahrens in allen Situationen den Eintritt in die ASR-Regelung in Form eines ASR-Signales bzw. einer ASR-Größe, wobei in jeder der Phasen Erkennen, Starten und/oder Aufrechterhalten des zweiten Regelkonzeptes, das ASR-Signal alternativ oder in Ergänzung zu den bekannten Bedingungen so lange herangezogen wird, bis vorgegebene Austrittsbedingungen vorliegen.

Nach einer vorteilhaften Ausführungsart des Verfahrens nach der Erfindung wird durch das geänderte Regelkonzept, wenn in dieser Phase aus der ASR-Regelung eine Bremsdruck-Regelung stattfindet, so lange die Regelung bestimmt, bis mindestens ein Fahrzeugrad an der Hinterachse oder Vorderachse für eine vorgegebene Mindestdauer stabiles Drehverhalten zeigt. Erfolgt dagegen in dieser Phase keine Bremsdruck-Regelung, wird das geänderte Regelkonzept so lange aufrechterhalten, bis alle Räder über eine längere Dauer in einem Geschwindigkeitsband und einem Beschleunigungsband liegen. Wenn alle Räder (kalibrierte Radgeschwindigkeiten oder nicht kalibrierte Radgeschwindigkeiten) in diesen Bändern liegen, weisen die Radgeschwindigkeiten keinen oder nur einen sehr geringen Antriebsschlupf auf, und können somit zur Bildung einer annähernd der tatsächlichen Fahrzeuggeschwindigkeit entsprechenden Fahrzeugrefernzgeschwindigkeit herangezogen werden. Zweckmäßig liegen die Radgeschwindigkeiten über eine Zeitdauer von mindestens 150 ms, vorzugsweise mindestens 200 ms, in einem Band von 5%, vorzugsweise 3%, zueinander und die gefilterten Radbeschleunigungen über eine Zeitdauer von mindestens 150 ms, vorzugsweise 200 ms, in einem Band von $\pm$ 0,6 g, vorzugsweise $\pm$ 0,3 g, wobei "g" die Erdbeschleunigungskonstante ist. Liegt dieser Zustand an, kann das geänderte Regelkonzept beendet werden.

Nach einer weiteren Ausführungsart der Erfindung wird der Verlauf der Fahrzeugreferenzgeschwindigkeit, insbesondere der Anstieg, d.h. der Differentialquotient, der Fahrzeugreferenzgeschwindigkeit über einen vorgegebenen Grenzwert, zum Erkennen einer Überdrehneigung ausgewertet. Der Grenzwert des Gradienten der Fahrzeugreferenzgeschwindigkeit, der Überdrehneigung signalisiert, wird dabei auf einen Wert im Bereich zwischen 0,1g und 0,3g - "g" bedeutet hier die Erdbeschleunigungskonstante - festgesetzt. Dieser Grenzwert kann allerdings auch in Stufen oder kontinuierlich in Abhängigkeit von dem Verlauf der Fahrzeugreferenzgeschwindigkeit variiert werden.

Weiterhin besteht eine Variante des erfindungsgemäßen Verfahrens darin, daß das Regelkonzept bei einem für eine Überdrehneigung typischen Raddrehverhalten erst nach dem Erfüllen einer oder mehrerer Startbedingungen geändert wird. Ein Anstieg der Fahrzeugreferenzgeschwindigkeit über einen vorgegebenen Grenzwert, der beispielsweise im Bereich zwischen 0,1g und 0,5g vorgegeben werden kann, und ein Fortdauern dieser Tendenz während einer vorgegebenen Mindestzeitspanne von beispielsweise 40 bis 200 ms, und ein Eintritt in die ASR-Motorregelung können als . Startbedingungen gewählt werden. Ein Eintritt in die ASR-Motorregelung findet statt, wenn mindestens ein Rad über einer von Bedingungen abhängenden variablen Regelschwelle liegt.

Als einzige Startbedingung kann vorzugsweise auch nur ein Eintritt in die ASR-Motorregelung gewählt werden, wenn der Eintritt in die ASR-Motorregelung vor dem Erreichen des Mindestwertes des Anstiegs der Fahrzeugreferenzgeschwindigkeit liegt oder der Mindestwert nicht über die Mindestzeitspanne andauert. Ein zweckmäßiger Start-Grenzwert in die ASR-Motorregelung liegt im Bereich zwischen 1 km/h und 2 km/h für mindestens ein Rad.

Nach einer weiteren Ausführungsart der Erfindung ist es vorgesehen, daß nach dem Wiedereintritt mindestens eines Fahrzeugrades in ein stabiles Drehverhalten, d.h. nach dem Eintritt dieses Rades in den stabilen Bereich der Reibbeiwert-Schlupfkurve, dieses Rad die Führung der Fahrzeugreferenzgeschwindigkeit übernimmt. Je nach Konstruktion des Fahrzeugs übernimmt das zuerst stabil werdende Fahrzeugrad oder ein bestimmtes Rad (Hinterrad oder Vorderrad) oder das Rad einer bestimmten Radgruppe (Kombination Vorder-Hinterrad) diese Aufgabe. Vorteilhaft kann das geänderte Regelkonzept beim direkten Übergang aus einer Antriebsschlupfregelung in eine Bremsdruck-Regelung (ABS-Regelung) durch das Erkennen einer ersten stabilen Phase an der Hinterachse oder der zweiten stabilen Phase an der Vorderachse beendet werden. Das Beenden bei der zweiten stabilen Phase schließt aus, daß das geänderte Regelkonzept zu früh durch ein charakteristisches gegenphasiges Schwingen der Räder bei Bremsdruckbeaufschlagung überdrehender Räder beendet wird.

In vielen Fällen ist es von Vorteil, wenn gemäß einer weiteren Ausführungsart der Erfindung nach dem Umschalten auf das geänderte Regelkonzept und Feststellen einer Bremsbetätigung - ein solches Signal kann z.B. mit Hilfe des Bremslichtschalters gewonnen werden - beim Einsetzen der Regelung der Bremsdruckabbau um eine vorgegebene, von dem Raddrehverhalten abhängige Zeitspanne verzögert wird. Je nach der Höhe der zu diesem Zeitpunkt festgestellten Radverzögerung setzt der Druckabbau beim Einsetzen der Regelung um beispielsweise 5 ms bis 70 ms später ein. In wieder anderen Fällen ist es von Vorteil, wenn gemäß einem weiteren Ausführungsbeispiel nach der Erfindung das Umschalten auf die Normalregelung, nachdem die Austrittsbedingungen aus dem geänderten Regelkonzept erfüllt bzw. ermittelt sind, verzögert wird. Die Berücksichtigung des Schlupfes bei der Bremsdruckregelung setzt dann zu einem späteren Zeitpunkt ein, da scheinbar stabile Radverläufe auch durch Differentialeffekte entstehen können, welche nicht berücksichtigt werden sollen. Die Verzögerung wird vorteilhaft durch ein Hochsetzen eines Wertes in einem Integrator erreicht, dessen Größe und Rücklaufgradient die Zeitspanne bestimmt, um die der Eintritt in die Normalregelung verzögert wird. Darüber hinaus kann der verzögerte Eintritt in die Normalregelung vorteilhaft in Abhängigkeit von einer variablen Regelschwelle gesteuert werden, die in Abhängigkeit von einem typischen Radverhalten des Fahrzeugs (abhängig von den Trägheitsmomenten usw.) den Austritt aus dem geänderten Regelkonzept bestimmt.

Eine weitere Ausführungsart des erfindungsgemäßen Verfahrens besteht darin, daß beim Feststellen eines für ein Überdrehen typischen Raddrehverhaltens und einem Beschleunigen des Fahrzeugs bzw. Ansteigen der Fahrzeugreferenzgeschwindigkeit und/oder dem Eintritt in die ASR-Motorregelung im unmittelbaren Anschluß an eine Regelbremsung ein zu diesem Zeitpunkt noch andauernder Regelzyklus vorzeitig beendet wird.

Schaltungsanordnungen zur Durchführung des erfindungsgemäßen Verfahrens, in denen die Schritte Erkennen und/oder Starten und/oder Aufrechterhalten des geänderten Regelkonzeptes nach Maßgabe eines ASR-Signals implementiert sind, sind in den Unteransprüchen beschrieben.

Vorteilhaft sind die Austrittsbedingungen aus dem zweiten Regelkonzept in einer Phase, bei der aus der ASR-Regelung eine Bremsdruck-Regelung stattfindet, erfüllt, wenn mindestens ein Fahrzeugrad an der Hinterachse und/oder ein Fahrzeugrad an der Vorderachse für eine vorgegebene Mindestdauer stabiles Drehverhalten zeigt.

Zweckmäßig sind die Austrittsbedingungen aus dem zweiten Regelkonzept in einer Phase, bei der keine Bremsdruck-Regelung stattfindet, erfüllt, wenn alle Räder über eine längere Dauer, mindestens 150ms, in einem Geschwindigkeitsband, maximal 5%, und/oder einem Beschleunigungsband, maximal $\pm 0,6$ g, liegen.

In einer speziellen Ausführungsart enthält die Schaltung einen als gegengekoppelten Integrator dienenden digitalen Zähler, der, sobald die Startbedingungen erfüllt sind, in Lauf gesetzt wird und der die Fahrzeugreferenzgeschwindigkeit mit einer vorgegebenen Zeitkonstanten integriert oder, der beim Erfüllen der beim Eintritt in die ASR-Motorregelung auf einen festen Wert (vREMS), z.B. auf 10 km/h, gesetzt wird.

Beim Austritt aus der ASR-Regelung in einer Phase, bei der keine Bremsdruck-Regelung stattfindet, sind die Austrittsbedingungen aus dem zweiten Regelkonzept erfüllt, wenn die ASR-Regelung einen Austritts-Grenzwert erreicht oder unterschreitet.

Der Integrator der erfindungsgemäßen Schaltung wird vorteilhafterweise während eines Regelzyklus auf Null gesetzt, sobald ein Fahrzeugrad stabiles Drehverhalten zeigt, und wieder erneut gestartet, sobald die Startbedingungen erfüllt sind.

Die Schaltungsanordnung ist vorteilhaft so ausgelegt, daß der während eines Regelzyklus infolge eines stabilen Drehverhaltens eines Fahrzeugrades auf Null gesetzte Integrator beim Eintritt in die ASR-Motorregelung sofort wieder - unabhängig von weiteren Startbedingungen - in Lauf gesetzt wird und während der ASR-Regelung - solange die Austrittskriterien nicht erfüllt sind - immer wieder (bei jedem Loop) auf einen festen Wert gesetzt wird. Da das Signal mit e.inem bestimmten Gradienten zurückläuft, wird durch das Hochsetzen dieses Signals ein Nachlauf des geänderten Regelmodus sichergestellt, bis eine Austritts-Grenzwert erreicht oder unterschritten ist.

Weitere Merkmale, Vorteile und Anwendungsmöglichkeiten der Erfindung gehen aus der folgenden Beschreibung von Ausführungsbeispielen anhand der beigefügten Abbildungen hervor.

Es zeigen

Fig.1 im Diagramm den zeitlichen Verlauf der Fahrzeuggeschwindigkeit, der Fahrzeugreferenzgeschwindigkeit, der Geschwindigkeit eines Rades und den Verlauf einer abgeleiteten Regel- und Steuergröße nach der in dem DE 35 21 960 A1 beschriebenen Verfahren

Fig. 2 im Diagramm den zeitlichen Verlauf der Fahrzeuggeschwindigkeit, der Fahrzeugreferenzgeschwindigkeit, der Geschwindigkeit eines Rades und den Verlauf einer abgeleiteten Regel- und Steuergröße bei einem aus der Antriebsschlupfregelung eingeleiteten Bremsvorgang auf besonders glatter Fahrbahn

Fig. 3 im Blockschaltbild den prinzipiellen Aufbau einer Schaltungsanordnung zur Durchführung des erfindungsgemäßen Verfahrens und

Fig. 4 im Diagramm den zeitlichen Verlauf des Sonderregelungsmodus in Abhängigkeit von einem ASR-Motoreingriff.

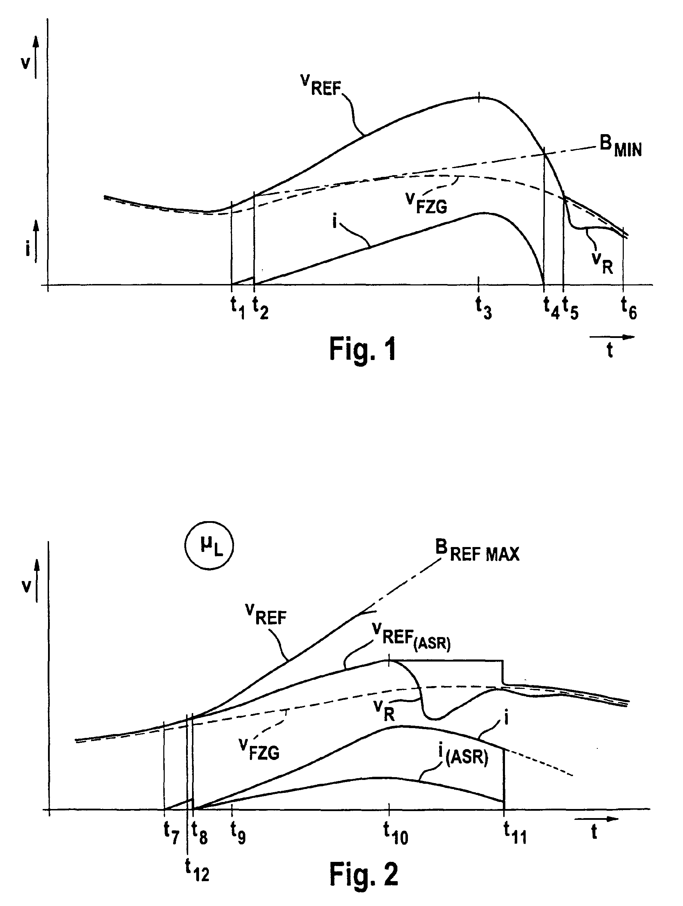

In Fig. 1 ist vereinfacht und idealisiert der Verlauf der Fahrzeugreferenzgeschwindigkeit vREF in einer Situation wiedergegeben, in der das Verfahren nach der DE 35 21 960 A1 zur Wirkung gelangt. Zum Zeitpunkt t1 wächst die Geschwindigkeit vR des Fahrzeugsrades, auf das sich das Diagramm bezieht, über die gestrichelt dargestellte Fahrzeuggeschwindigkeit vFZG an. Die Referenzgröße vREF folgt in der hier beobachteten Situation der Radgeschwindigkeit vR, weil z. B. in dieser Situation alle Räder synchron positiven Schlupf annehmen, die Geschwindigkeit der Räder also höher als die Fahrzeuggeschwindigkeit wird. Die ist möglich, weil über den Antriebsstrang alle Räder miteinander gekoppelt sind und weil der Reibbeiwert zwischen Reifen und Straße in dieser Situation so gering ist, daß die Unterschiede im Straßenmoment an den einzelnen Rädern kleiner als die Koppelmomente der Räder untereinander sind.

Auf die Überdrehneigung reagiert die Überdreh-Regelung erst zum Zeitpunkt t2, weil erst nach Ablauf der Zeitspanne t1-t2 die Startbedingungen erfüllt sind. In dem hier beschriebenen Beispiel muß für eine Zeitspanne von 70 ms der Anstieg der Fahrzeugreferenzgeschwindigkeit vREF einen Grenzwert von 0,3g erreichen oder überschreiten, um die Überdreh-Regelung auszulösen. Zum Zeitpunkt t2 wird das Regelkonzept geändert. Während im "Normalfall", d.h. so lange keine Überdrehneigung festgestellt wird, die Bremsdruckregelung der blockiergeschützten Bremsanlage sowohl von dem momentanen Radschlupf als auch von der negativen oder positiven Beschleunigung, d.h. von der Beschleunigung oder Verzögerung, abhängig ist, wird nach der Umschaltung zum Zeitpunkt t2 - sobald die Bremse betätigt wird -die Bremsdruckregelung unabhängig von dem momentanen Schlupf. In dieser Situation wird der Bremsdruck ausschließlich von der Verzögerung und Beschleunigung des jeweiligen Rades bestimmt. Ein Entbremsen, d.h. eine zu starke Absenkung des Bremsdruckes als Folge des überdrehenden Rades und des dadurch bedingten Ansteigens der Referenzgröße vREF über die tatsächliche Fahrzeuggeschwindigkeit vFZG hinaus wird auf diese Weise ausgeschlossen. Ein Blockieren der Räder wird ebenfalls verhindert, weil das geänderte Regelkonzept, d.h. die alleinige Abhängigkeit der Bremsdruckregelung von der positiven oder negativen Beschleunigung, nur bis zu einem bestimmten Zeitpunkt gilt.

In der Ausführungsart des Verfahrens, auf die sich Fig. 1 bezieht, wird der Verlauf der Fahrzeugreferenzgeschwindigkeit vREF, insbesondere der Anstieg dieser Bezugsgröße, zum Erkennen einer Überdrehneigung ausgewertet. Der Zeitpunkt zur Beendigung der Sonderregelung bzw. Überdreh-Regelung und zum Zurückschalten in die Normalregelung wird mit Hilfe eines gegengekoppelten Integrators, der in einer digitalen Regelschaltung durch einen Zähler verwirklicht werden kann, ermittelt.

Bei dieser Integration der Referenzgeschwindigkeit vREF wird als Zeitkonstante eine vorgegebene Größe berücksichtigt, welche der Mindestbeschleunigung angenähert ist, die ein Fahrzeug auch unter sehr ungünstigen Bedingungen, d.h. auf sehr glatter Fahrbahn, erreichen kann. Eine strich-punktiert-dargestellte Gerade B Min mit einem dieser Mindestbeschleunigung entsprechenden Gradienten stellt diese Zeitkonstante dar. Für diesen Gradienten wird beispielsweise ein Wert im Bereich zwischen 0,1 und 0,3g gewählt.

Die Gerade B Min schneidet die Referenzgeschwindigkeit vREF im Zeitpunkt t2, weil zu dieser Zeit die Umschaltung auf das geänderte Regelkonzept erfolgt und die Integration einsetzt. Den Zählerinhalt symbolisiert die Kurve i. Beginnend zum Zeitpunkt t2 wächst der Zählerinhalt entsprechend dem Anstieg der Referenzgeschwindigkeit vR,F gegenüber der gestrichelt wiedergegebenen Fahrzeuggeschwindigkeit vFZG bzw. gegenüber der durch die Mindestbeschleunigung BMin gegebenen Geraden. Sobald sich die Referenzgeschwindigkeit vREF wieder der Fahrzeuggeschwindigkeit nähert, das Überdrehen bzw. der positive Schlupf geringer wird, verringert sich im gleichen Maße der Integratorinhalt i und wird zum Zeitpunkt t4, in dem die Gerade B Min die abfallende Kurve vREF schneidet, wieder zu Null.

Für die Integration gilt somit die Beziehung

$$\int_{t1}^{t2}(b_{REF} - B_{Min})dt;$$

unter "bREF" ist in dieser Formel der Anstieg, d.h. der Differentialquotient, der Fahrzeugreferenzgeschwindigkeit vREF zu verstehen.

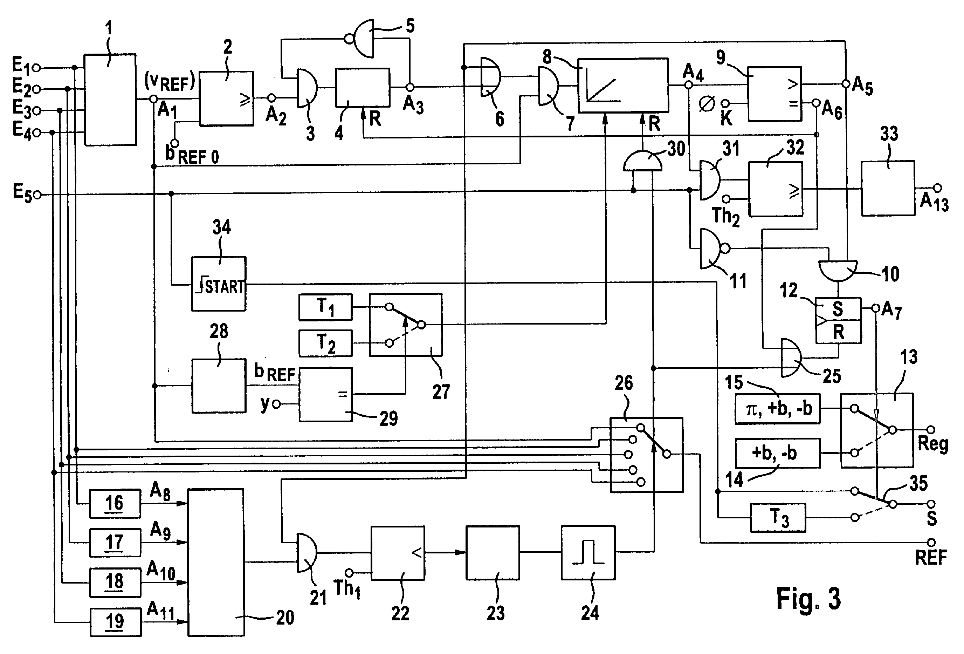

Der Integrationsvorgang zwischen t1 und t2 ist für die "Überdreh-Regelung" sekundär. In der später anhand der Fig. 3 beschriebenen Schaltungsanordnung wird lediglich mit dem gleichen Integrator die Startbedingung ermittelt, zum Zeitpunkt t2 dann der Integrator auf Null zurückgestellt, so daß er seine eigentliche, zuvor beschriebene Aufgabe erfüllen kann. Diesen Integrationsvorgang zur Ermittlung der Startbedingung symbolisiert der den Integratorinhalt darstellende Kurvenverlauf i im Zeitintervall t1 bis t2.

Bei dem in Fig. 1 dargestellten Vorgang schließt sich unmittelbar an eine Situation mit durchdrehenden Rädern, die einen starken Anstieg der Referenzgeschwindigkeit vREF über die tatsächliche Fahrzeuggeschwindigkeit vFZG hinaus zur Folge hat, eine Regelbremsung an. Die Bremse wurde zum Zeitpunkt t3 "vorsichtig", d.h. mit geringer Fußkraft, betätigt. Entsprechend dem ansteigenden Bremsdruck sinkt die Radgeschwindigkeit vR desjenigen Fahrzeugrades, das in der hier betrachteten Situation die Fahrzeugreferenzgeschwindigkeit vREF führt. Zum Zeitpunkt t5 sinkt die Radgeschwindigkeit vR unter die tatsächliche Fahrzeuggeschwindigkeit vFZG. Die Radgeschwindigkeit vR sinkt so weit und so schnell, daß die Bremsschlupfregelung ausgelöst wird, die durch Konstanthalten und/oder Reduzieren des Bremsdruckes zu einer Wiederbeschleunigung des Fahrzeugrades und Annäherung der Radgeschwindigkeit vR an die Fahrzeuggeschwindigkeit vFZG führt. Dies ist in Fig. 1 durch den Verlauf der Radgeschwindigkeit vR im Anschluß an den Zeitpunkt t5 angedeutet. Zum Zeitpunkt t5 war die Sonderregelung schon beendet, da bereits zuvor der Integratorinhalt i zu Null geworden war.

In dem Sonderregelmodus wird der momentane Radschlupf und damit die Fahrzeugreferenzgeschwindigkeit vREF von dem Bremsschlupfregler bzw. von der Verknüpfungslogik des Reglers nach dem Zeitpunkt t2 außer acht gelassen, weil die Logik aus dem Verlauf der Referenzgeschwindigkeit vREF erkennt, daß (1.) ein für eine Überdrehneigung typisches Raddrehverhalten vorliegt - dies gilt ab dem Zeitpunkt t1 - und (2.) weil außerdem die Startbedingungen - zum Zeitpunkt t2 - erfüllt sind. Die Regelung richtet sich folglich nach dem Zeitpunkt t2 nur noch nach der momentanen Radverzögerung oder Radbeschleunigung. Findet keine Bremsdruckregelung statt, tritt zum Zeitpunkt t4 wieder das normale Regelkonzept in Funktion, bei dem sowohl der Schlupf als auch die Radbeschleunigung und -verzögerung Regelkriterien sind; zum Zeitpunkt t4 wird nämlich der Integratorinhalt wieder zu Null.

Wenn jedoch während der Überdrehphase, d.h. während des für ein Überdrehen oder für eine Überdrehneigung typischen oder verdächtigen Raddrehverhaltens und nach dem Erfüllen der Startbedingungen, die Bremsdruckregelung einsetzt, gilt das geänderte Regelkonzept so lange, bis ein Rad oder ein bestimmtes Fahrzeugrad - je nach Auslegung des Reglers -wieder stabil läuft bzw. wieder in den stabilen Bereich der Reibbeiwert/Schlupfkurve gelangt. Wenn vor dem Zeitpunkt t4 die Bremsdruckregelung bereits eingesetzt hätte, wäre diese letztgenannte Bedingung in dem Bremsvorgang nach Fig. 1 zum Zeitpunkt t6 erfüllt gewesen. Das Fahrzeugrad, für das die Kurve vR gilt, erfährt nämlich im Anschluß an eine Beschleunigung wieder eine Verzögerung, was die Logik als Hinweis für ein stabiles Raddrehverhalten auffaßt. Nach t6 bestimmt in diesem Fall wieder die Fahrzeugreferenz vREF und damit der Schlupf in Kombination mit der Radverzögerung und -beschleunigung die Bremsdruckregelung.

Fig. 2 bezieht sich auf einen Beschleunigungs- und Bremsvorgang auf besonders glatter Fahrbahn bei einem Fahrzeug mit Antriebsschlupfregelung, bei dem das vorstehend beschriebene Verfahren beibehalten und um weitere Schritte ergänzt wird. Der Reibbeiwert ($\mu$L) ist in dieser Situation sehr gering. Zum Beispiel kann ein Reibwert im Bereich von $\mu$ = 0,05 bis 0,4 vorliegen. Etwa zum Zeitpunkt t12 setzt ein Eintritt in die ASR-Motorregelung ein. Der Eintritt in die ASR-Motorregelung findet statt, wenn mindestens ein Rad des Fahrzeugs über einer von Bedingungen abhängenden variablen Schlupf-Regelschwelle liegt. Es können auch Bedingungen vorliegen, bei denen der Eintritt in die ASR-Motorregelung nach dem Zeitpunkt t8 stattfindet. Die ASR-Motorregelung bewirkt über einen Motoreingriff eine Verringerung des Motormoments und damit der Radgeschwindigkeit vR, der die Fahrzeugreferenzgeschwindigkeit vREF$_{(ASR)}$ folgt. Der Anstieg dieser Referenzgeschwindigkeit vREF$_{(ASR)}$ erreicht damit nicht den ohne Antriebsschlupfregelung sich zur Zeit t8 einstellenden Mindestwert der Fahrzeugreferenzgeschwindigkeit vREF, der als Startbedingung - oder - wenn der Zeitpunkt t12 nach dem Zeitpunkt t8 erreicht wird - zur Aufrechterhaltung - für das geänderte Regelkonzept erforderlich ist. In Weiterbildung des Verfahrens nach der DE 35 21 960 A1 reagiert die Überdreh-Regelung auf eine Überdrehneigung, d.h. in allen, mit den Schritten Erkennen, Starten und Aufrechterhalten abgesicherten Überdrehphasen, auch nach Maßgabe eines ASR-Signals. Das ASR-Signal (ASR_Active) wird beim Eintritt in die ASR-Motorregelung gesetzt und der Sonderregelmodus für eine sich an die Antriebsschlupfregelung anschließende Bremsdruck-Regelung gestartet, der den Radschlupf außer acht läßt.

Situationen, in denen sich etwa zur Zeit t9 ein großes Durchdrehen der Räder und ein Anstieg der Fahrzeugreferenzgeschwindigkeit vREF einstellt, der nahezu der vorgegebenen Geraden BREFMax, die durch den physikalisch maximal möglichen Gradienten bestimmt ist, findet nur ohne einen Eitritt in die ASR-Motorregelung statt. In dem in Fig. 2 dargestellten Fall mit Antriebsschlupfregelung beginnt zur Zeit t10 während der Überdrehphase ein Bremsvorgang, der jedoch, weil die Straße hier sehr glatt ist, sehr bald zum Instabilwerden eines Fahrzeugrades und Einsetzen der Bremsdruckregelung führt. Außerdem nimmt die Fahrzeuggeschwindigkeit vFZG nur vergleichsweise gering ab.

Die Referenzgröße $vREF_{(ASR)}$ zeigt an, daß zumindest das momentan für diese Referenzgröße maßgebende Rad weiterhin mit positivem Schlupf läuft. Allerdings ist die Referenzgröße $vREF_{(ASR)}$ seit dem Zeitpunkt t12, an dem die Startbedingung - Eintritt in die ASR-Motorregelung -zur Änderung des Regelkonzeptes erfüllt war, für die Regelung des Bremsdruckes ohne Belang, so daß eine Entbremsung infolge der Differenz zwischen der Referenzgröße $vREF_{(ASR)}$ und der Fahrzeuggeschwindigkeit vFZG nicht eintreten kann. Zum Zeitpunkt t11 zeigt das hier beobachtete Rad, dessen Geschwindigkeit vR in Fig. 2 dargestellt ist, wieder stabiles Drehverhalten. Dies erkennt die Elektronik aus dem Verzögerungsverhalten des Rades im Anschluß an eine Wiederbeschleunigung. Es wird zum Zeitpunkt t11 der Integrator zurückgesetzt und die Referenzgeschwindigkeit auf den Wert der Radgeschwindigkeit zur Zeit t11 reduziert. Die Sonderregelung ist damit beendet. Ab t11 gelten wieder Schlupf, Radbeschleunigung und -verzögerung als Regelkritierien. Zum erneuten Eintritt in die Überdreh-Regelung und zum Starten des Integrators müßten wiederum die Startbedingung erfüllt sein.

Maßgebend für die Absenkung der Referenzgröße vREF und die Zurücksetzung des Integrators ist in dem beschriebenen Ausführungsbeispiel das zuerst wieder stabil laufende Rad. In anderen Ausführungsarten erfolgt die Zurückschaltung in die Normalregelung erst dann, wenn ein Hinterrad oder das am schnellsten rotierende Hinterrad stabiles Drehverhalten zeigen. Bei manchen Fahrzeugkonstruktionen kann es günstiger sein, einem Vorderrad die Führung der Referenzgröße zu übertragen. Kriterien für die Auswahl des führenden Rades sind u.a. die Ausbildung der Differentiale, Diffarentialsperren und Kupplungen in den Antriebssträngen.

Die Abnahme des positiven Schlupfes kann durch Betätigen der Bremse in dem Zeitpunkt t10 oder durch Reduzieren der Antriebskraft aufgelöst werden. Der Integratorinhalt wird nach dem Eintritt in die Antriebsschlupfregelung zu einer Zeit auf Null gesetzt, wenn alle Räder über eine Mindestzeitspanne von 150ms, vorzugsweise 200ms, in einem Geschwindigkeitsband zueinander von ca.5 Prozent, vorzugsweise 3 Prozent, und die gefilterten Radbeschleunigungen in einem Band von ca. 0,6 g, vorzugsweise 0,3 g, liegen, so daß für eine eventuell anschließende Regelbremsung erneut das normale Regelkonzept gilt. Die Referenzgröße $vREF_{(ASR)}$ und die Fahrzeuggeschwindigkeit stimmen zu diesem Zeitpunkt wieder (annähernd) überein.

Eine Schaltungsanordnung zur Durchführung des erfindungsgemäßen, anhand der Fig. 1 und 2 erläuterten Verfahrens, veranschaulicht Fig. 3.

Über die Eingangsklemmen E1 bis E4 werden einer logischen Schaltung 1 die der momentanen Geschwindigkeit der einzelnen Räder vR1 (E1), vR2 (E2)' vR3 (E3) und vR4 (E4) entsprechenden elektrischen Signale zugeführt. Nach einem vorgegebenen Schema oder Algorithmus wird in dieser Logikschaltung 1 die Fahrzeugreferenzgeschwindigkeit vREF gebildet und über den Ausgang A1 einem Vergleicher 2 zugeleitet.

Ist der Gradient bREF der Fahrzeugreferenzgeschwindigkeit vREF gleich oder größer als ein Start-Grenzwert bREFO der z.B. 0,3g beträgt, wird dieser Zustand über ein UND-Gatter 3 einem digitalen Zähler 4 gemeldet, sofern das Signal am Ausgang A3 dieses Zählers 4 Null ist, weil nur in diesem Fall wegen der Rückführung über einen Inverter 5 die zweite UND-Bedingungen für das UND-Gatter 3 erfüllt ist. Das Ausgangssignal "1" oder "H" am Ausgang A3 des Zählers 4 bleibt zunächst erhalten, solange die vom Vergleicher 2 überwachte Startbedingung gegeben ist. Über ein ODER-Gatter 6 und ein UND-Gatter 7, dessen zweite Bedingung durch das Vorhandensein eines Referenzsignals vREF erfüllt ist, wird ein Integrator 8 angesteuert, dessen Inhalt über den Ausgang A4 einem Vergleicher 9 mitgeteilt wird. Ist das Vergleichsergebnis größer Null, diese Konstante liegt am Eingang K des Vergleichers an, wird wegen der Signalrückführung zu dem ODER-Gatter 6 und dem UND-Gatter 7 die Integration der Referenzgeschwindigkeit vREF durch den Integrator 8 fortgesetzt.

Gleichzeitig erfüllt ein Signal am Ausgang A5 des Vergleichers 9 eine der beiden UND-Bedingungen eines UND-Gatters 10.

Ermittelt der Vergleicher 9 den Inhalt des Integrators als Null, führt dies über den Ausgang A6 des Vergleichers 9 zum Zurücksetzen (R = "RESET") des Zählers 4 und damit zur Beendigung des Signals am Ausgang A3 dieses Zählers. Da zu diesem Zeitpunkt am Ausgang A5 des Vergleichers 9 ebenfalls kein Signal anstehen kann, wird der Integrator 8 erst dann wieder in Gang gesetzt, wenn am Ausgang des Vergleichers 2 ein Signal ansteht und der vorgegebene Zählerstand des Zählers 4 erreicht ist. Die Stufen 2 und 4 setzen somit die Startbedingungen für den Integrator fest.

Die zweite UND-Bedingung des Gatters 10 ist wegen des Inverters 11 erfüllt, wenn an dem Eingang E5 kein Signal anliegt; dieser Zustand ist gegeben, so lange kein Regelzyklus abläuft. Ein flankengesteuertes Flip-Flop mit festgelegter Grundstellung wird von dem Ausgangssignal des UND-Gatters 10 gesetzt und schaltet einen Schalter 13 in die gestrichelt dargestellte Position um, in der ein Schaltkreis 14 mit der Ausgangsklemme Reg. verbunden ist. Der Schaltkreis 14 symbolisiert das in der sogen. Überdrehphase gültige geänderte Regelkonzept. So lange der Baustein 14 über den Schalter 13 an die Regelungsklemme Rg. angeschaltet ist, findet eine radindividuelle Beschleunigungs-/Verzögerungsregelung ohne Berücksichtigung des momentanen Schlupfes statt.

Befindet sich dagegen der Schalter 13 in der dargestellten Ausgangsposition, wird die Regelung durch den Schaltkreis 15 vorgegeben, der für die Normalregelung unter Berücksichtigung des momentanen Schlupfes in Kombination mit der radindividuellen Beschleunigung und Verzögerung zuständig ist. Diese Normalregelung gilt, so lange an dem Ausgang A7 des Flip-Flops 12 kein Signal ansteht. Dies ist der Fall, wenn der Inhalt des Integrators 8 außerhalb eines Regelzyklus Null ist oder wenn innerhalb eines Regelzyklus mindestens ein Rad oder ein bestimmtes Rad wieder stabiles Drehverhalten zeigen.

Die Eingänge E1 bis E4, an denen Informationen über die individuellen Radgeschwindigkeiten anliegen, sind auch mit den Differenzierstufen 16 bis 19 verbunden. An den Ausgängen A8 bis A11 der Stufen 16 bis 19 liegt somit jeweils die Information über die individuelle Beschleunigung oder Verzögerung eines Fahrzeugrades an. Ein Logikblock 20 übernimmt die Aufgabe, aus den Verzögerungs- und Beschleunigungssignalen der einzelnen Räder festzustellen, welches Rad stabil läuft. Die Geschwindigkeit dieses Rades wird dann auch, wie anhand der Diagramme Fig. 1 und Fig. 2 bereits geschrieben wurde, zur Bezugsgröße vREF.

Das Signal am Ausgang der Auswahlstufe 20 wird in einem UND-Gatter 21 mit dem Ausgangssignal AS des Vergleichers 9 verknüpft. Ein Aussignal des UND-Gatters 21 ist folglich dann vorhanden, wenn ein Rad stabil läuft und wenn der Integratorinhalt größer als Null ist.

Ein Vergleicher 22 stellt fest, ob die individuelle Radbeschleunigung b RAD den an der Klemme Thl des Vergleichers 22 anliegenden Grenzwert unterschreitet. Dies ist der Fall, wenn das Rad eine bestimmte Verzögerung erfährt und dadurch erkennen läßt, daß es stabil läuft. Bleibt diese Bedingung für eine vorgegebene Zeitspanne von beispielsweise 100 ms erhalten, was durch einen Zähler 23 festgestellt wird, führt dies über die Schaltung 24 zu einem kurzzeitigen Umschaltimpuls, der über ein ODER-Gatter 25 das Flip-Flop 12 zurücksetzt. Durch dieses, durch ein stabil laufendes Rad ausgelöstes Zurückschalten nimmt der Schalter 13 wieder seine Ausgangsposition ein, in der der Schaltkreis 15 das Regelungskonzept bestimmt.

Über den Schalter 26 wird außerdem die von der Auswahlschaltung 20 ermittelte Geschwindigkeit des stabil laufenden Rades mit der Klemme REF verbunden, so daß nunmehr an dieser Klemme die Geschwindigkeit des stabil laufenden Rades als Fahrzeugreferenzgeschwindigkeit ansteht.

Eine Umschaltung zu einem Zeitpunkt auf eine Integration mit großer Zeitkonstante wird in der Schaltungsanordnung nach Fig. 3 durch einen Schalter 27 erreicht, der von der Zeitkonstanten T1 auf T2 umschaltet, sobald die in der Stufe 28 differenzierte Fahrzeugreferenzgeschwindigkeit vREF das ist also gewissermaßen die Referenzbeschleunigung bREF annähernd zu Null wird bzw. einen kleinen Wert innerhalb eines Bereiches von beispielsweise +0,2g, annimmt. Der Grenzbereich wird über eine Eingangsklemme y einem Vergleicher 29 vorgegeben, der den Schalter 27 aus der dargestellten Grundstellung in die gestrichelte Position umlegt, sobald z.B. die Fahrzeuggeschwindigkeit konstant wird oder, genauer gesagt, in den durch die vorgenannten Grenzen definierten Bereich fällt.

Über den Schalter 27 wird die Zeitkonstante T1 oder T2 an den Integrator 8 angeschaltet.

Des weiteren ist noch nachzutragen, daß über ein UND-Gatter 30 der Integrator 8 immer dann zurückgestellt wird, wenn ein Rad oder ein bestimmtes Rad in den stabilen Bereich einläuft, daher die Stufe 24 einen Impuls abgibt, und wenn gleichzeitig über die Eingangsklemme E5 "Regelung" signalisiert wird, d.h. wenn gerade ein Regelzyklus läuft.

Über ein weiteres UND-Gatter 31 wird das über die Klemme E5 eingespeiste Regelungssignal mit dem Ausgangssignal des Integrators 8 kombiniert und über einen Vergleich er 32 einem Zähler 33 zugeführt.

Die Baustufen 31, 32 und 33 treten in Funktion, wenn bei noch nicht abgeschlossener Bremsschlupfregelung der Inhalt des Integrators 8 einen bestimmten Mindestwert, der durch die Bezugsgröße Th2 am zweiten Eingang des Vergleichers 32 vorgesehen ist, erreicht oder überschreitet. In diesem Fall wird dann über den Zähler 33 beschleunigt das Ende der Regelung herbeigeführt und über den Ausgang 13 ein entsprechendes Signal abgegeben. Solche Situationen, in denen die Bremsdruckregelung noch nicht beendet ist und dennoch positiver Schlupf mit Hilfe des Indikators 8 festgestellt wird, können sich in der Praxis ergeben, weil sich bei Bremsanlagen der hier beschriebenen Art der Bremsdruckregelvorgang über eine Mindestdauer von z.B. 700 ms erstreckt. Beim Signalisieren von positivem Schlupf wird daher zweckmäßigerweise die noch laufende Regelbremsung, wie hier mit Hilfe des Zählers 33 und des Ausgangssignals A13, beschleunigt beendet.

Schließlich ist in der Schaltung nach Fig. 5 noch ein Signalgeber 34 enthalten, der bei Bremsbetätigung, z.B. über einen Kontakt eines Bremslichtschalters, gesetzt wird und der über die Ausgangsklemme S die Bremsdruckregelung startet. Ist die Bremsanlage bei Bremsbetätigung bereits auf das geänderte Regelkonzept umgeschaltet, was durch ein Signal am Ausgang A7 des Flip-Flops 12 und Umschaltung des Schalters 13 bewirkt wurde, befindet sich auch ein Schalter 35 in der gestrichelt dargestellten Position. In dieser Schaltstellung gelangt eine Zeitkonstante T3 zur Wirkung, die zu Beginn der Regelung für eine Verlängerung des Bremsdruckaufbaus sorgt und dadurch den Übergang aus der Phase mit positivem Schlupf in den Bremsvorgang beschleunigt.

Zugunsten einer klareren Darstellung wurden die beiden zuletzt beschriebenen Maßnahmen, nämlich die vorzeitige Regelungsbeendigung über den Ausgang A13 und der direkte Einfluß des Bremsbetätigungssignals bzw. die Startregelung, in den Diagrammen, d.h. in den Fig. 1 und Fig. 2, nicht berücksichtigt.

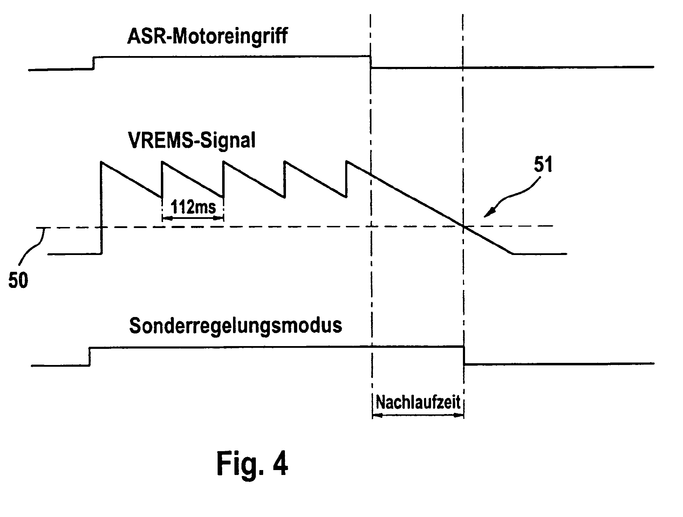

In Figur 4 ist das Verfahren nach der Erfindung beim Eintritt in die ASR-Motorregelung dargestellt. Dabei wird die Sonderregelung über das Signal ASR Active ausgelöst und in jedem Loop (Zeitschritt) so lange aufrecht gehalten, wie das Signal ASR_Active gesetzt ist. Das Signal ASR_Active wird gesetzt, wenn die ASR-Fahrzeug-Referenzgeschwindigkeit vREF(ASR) eine variable Regelschwelle erreicht oder überschreitet, wobei die ASR-Referenzgeschwindigkeit nach anderen Kriterien, unter anderen z.B nach Maßgabe des Motormoments, als die ABS-Referenzgeschwindigkeit gebildet wird.

Wie Figur 4 zeigt, wird der in Figur 3 der Schaltungsanordnung als digitaler Zähler ausgebildete gegengekoppelte Integrator 8 auf einen festen Wert (vREMS), z.B. auf 10 km/h, gesetzt, wenn das ASR-Signal ASR_Active von der ASR-Regelung generiert wird. Der Start-Grenzwert in die ASR-Motorregelung überschreitet immer eine variable Regelschwelle 50, die z.B. in einem Bereich zwischen 1 km/h und 2 km/h liegt. Das Signal ASR_Active wird in jedem Loop, oder in einem anderen festgelegten Zeitintervall erneut abgefragt und der Integrator 8 auf den vorgegebenen Wert hochgesetzt. Die Größe des Wertes ist so gewählt, dass der Rücklaufgradient des Wertes innerhalb eines Zeitintervalls nicht die Regelschwelle 50 unterschreitet. Er kann auch variabel in Abhängigkeit von der Geschwindigkeit festgelegt werden.

In einer Phase, bei der keine Bremsdruck-Regelung stattfindet, erfolgt eine Umschaltung des Schalters 13 in die in Figur 3 dargestellte Normalregelung, wenn die ASR-Regelung einen Austritts-Grenzwert 51 erreicht oder unterschreitet. Dieser Austritts-Grenzwert 51 kann mit der Regelschwelle 50 zusammenfallen, oder als separater Grenzwert unabhängig von der Regelschwelle 50 in der Steuerung implementiert sein. Über eine variable Ausbildung des Austritts-Grenzwertes 51 kann eine Nachlaufzeit gesteuert werden, d.h. die Zeit, nach der ein Eintritt in die Normalregelung erfolgt. Dabei wird die Nachlaufzeit in Abghängigkeit vom Rückzählgradient und/oder der Geschwindigkeit gesteuert. Als Austrittsbedingungen aus dem zweiten Regelkonzept in einer Phase, bei der keine Bremsdruck-Regelung stattfindet, wird in dem Logikblock 20 oder der ASR-Regelung überwacht, ob alle Räder über eine längere Dauer, mindestens 200ms, in einem Geschwindigkeitsband von maximal 3% und einem Beschleunigungsband von maximal ±0,3 g zueinander liegen. Sind diese Bedingungen erfüllt und/oder der Integrator 8 ist nicht mehr über der Austrittsschwelle wird der Sonerregelungsmodus verlassen.

Die Austrittsbedingungen aus der Sonderregelung erfolgt in einer Phase, bei der aus der ASR-Regelung eine Bremsdruck-Regelung stattfindet, wenn mindestens ein Fahrzeugrad an der Hinterachse und/oder ein Fahrzeugrad an der Vorderachse für eine vorgegebene Mindestdauer stabiles Drehverhalten zeigt.

## Patentansprüche

1. Verfahren zur Steuerung einer blockiergeschützten, für Kraftfahrzeuge mit Allradantrieb vorgesehenen Bremsanlage, bei dem das Drehverhalten der Fahrzeugräder darstellende elektrische Signale (VR1-VR4) erzeugt werden, aus denen nach elektronischer Verarbeitung und logischer Verknüpfung Bremsdruck-Steuersignale abgeleitet werden, mit denen beim Auftreten einer Blockierneigung der Bremsdruck gesenkt oder konstant gehalten und zur gegebenen Zeit wieder erhöht wird, und bei dem als Regelkriterien der Radschlupf und die Radverzögerung und/oder die Radbeschleunigung ausgewertet werden, wobei die individuelle Radgeschwindigkeit mit einer Fahrzeugreferenzgeschwindigkeit (vREF) verglichen wird, die unter Berücksichtigung des Drehverhaltens aller Räder gebildet wird und als Bezugsgröße für die Regelung des Bremsdruckes der einzelnen Räder dient, und wobei ferner bei einem Erkennen einer für eine Überdrehneigung typischen Raddrehverhalten ein geändertes Regelkonzept gestartet und bis zu einem bestimmten Zeitpunkt aufrechterhalten wird, indem für diese Zeitspanne der momentane Radschlupf als Regelkriterium außer acht bleibt und lediglich die Radbeschleunigung oder die Radverzögerung für die Bremsdruck-Regelung maßgebend wird **dadurch gekennzeichnet, daß** das Erkennen und/oder Starten und/oder Aufrechterhalten des geänderten Regelkonzeptes nach Maßgabe eines ASR-Signals (ASRActive) ausgewertet wird.

2. Verfahren nach Anspruch 1, **dadurch gekennzeichnet, daß** durch das geänderte Regelkonzept, wenn in dieser Phase aus der ASR-Regelung eine Bremsdruck-Regelung stattfindet, so lange die Regelung bestimmt wird, bis mindestens ein Fahrzeugrad an der Hinterachse oder Vorderachse für eine vorgegebene Mindestdauer stabiles Drehverhalten zeigt.

3. Verfahren nach Anspruch 1 oder 2, **dadurch gekennzeichnet, daß** das geänderte Regelkonzept, wenn in dieser Phase keine Bremsdruck-Regelung stattfindet, so lange aufrechterhalten wird, bis alle Räder über eine längere Dauer in einem Geschwindigkeitsband und einem Radbeschleunigungsband liegen.

4. Verfahren nach Anspruch 3, **dadurch gekennzeichnet, daß** die Radgeschwindigkeiten über eine Zeitdauer von mindestens 150 ms, vorzugsweise 200 ms, in einem Band von 5%, vorzugsweise 3%, zueinander liegen.

**5.** Verfahren nach Anspruch 3, **dadurch gekennzeichnet, daß** die gefilterten Radbeschleunigungen über eine Zeitdauer von mindestens 150 ms, vorzugsweise 200 ms, in einem Band von $\pm$ 0,6 g, vorzugsweise $\pm$ 0,3 g liegen, wobei "g" die Erdbeschleunigungskonstante ist.

**6.** Verfahren nach einem der Ansprüche 1 bis 5, **dadurch gekennzeichnet, daß** der Verlauf der Fahrzeugreferenzgeschwindigkeit (vREF oder VREF$_{(ASR)}$) zur Erkennung einer Überdrehneigung ausgewertet wird.

**7.** Verfahren nach Anspruch 6, **dadurch gekennzeichnet, daß** der Anstieg der Fahrzeugreferenzgeschwindigkeit (vREF) über eine vorgegebenen Grenzwert, der vorzugsweise in Abhängigkeit von dem Verlauf der Fahrzeugreferenzgeschwindigkeit (vREF) kontinuierlich oder in Stufen variiert wird, zum Erkennen der Überdrehneigung ausgewertet wird.

**8.** Verfahren nach einem der Ansprüche 1 bis 7, **dadurch gekennzeichnet, daß** das Regelkonzept bei einem für eine Überdrehneigung typischen Raddrehverhalten erst nach dem Erfüllen einer oder mehrerer Startbedingungen geändert wird.

**9.** Verfahren nach Anspruch 8, **dadurch gekennzeichnet, daß** als Startbedingungen ein Anstieg der Fahrzeugreferenzgeschwindigkeit (vREF) über einen vorgegebenen Grenzwert und Beibehaltung dieser Tendenz während einer vorgegebenen Mindestzeitspanne und ein Eintritt in die ASR-Motorregelung gewählt werden.

**10.** Verfahren nach Anspruch 8, **dadurch gekennzeichnet, daß** als Startbedingung ein Eintritt in die ASR-Motorregelung gewählt wird.

**11.** Verfahren nach Anspruch 9 oder 10, **dadurch gekennzeichnet, daß** ein Start-Grenzwert der ABS-Fahrzeugreferenzgeschwindigkeit im Bereich zwischen 0,1g und 0,5g vorgegeben wird.

**12.** Verfahren nach Anspruch 9 oder 11, **dadurch gekennzeichnet, daß** eine Start-Mindestzeitspanne im Bereich zwischen 40ms und 200ms vorgegeben wird.

**13.** Verfahren nach einem der Ansprüche 1 bis 12, **dadurch gekennzeichnet, daß** nach dem Wiedereintritt mindestens eines Fahrzeugsrades in ein stabiles Drehverhalten dieses Rad die Führung der Fahrzeugreferenzgeschwindigkeit (vREF) übernimmt.

**14.** Verfahren nach einem der Ansprüche 1 bis 13, **dadurch gekennzeichnet, daß** nach dem Umschalten auf das geänderte Regelkonzept und Signalisieren einer Bremsbetätigung beim Einsetzen der Regelung der Bremsdruckabbau um eine vorgegebene, von dem Raddrehverhalten abhängige Zeitspanne verzögert wird.

**15.** Verfahren nach Anspruch 14, **dadurch gekennzeichnet, daß** der Bremsdruckabbau in Abhängigkeit von dem Raddrehverhalten zwischen beispielsweise 5 ms und 70 ms verzögert wird, wobei bei geringer Radverzögerung, d.h. bei einer Verzögerung unter etwa 1 bis 2g, eine kürzere Verzögerungszeit, bei einer hohen Radverzögerung eine längere Verzögerungszeit gewählt wird.

**16.** Verfahren nach einem der Ansprüche 1 bis 15, **dadurch gekennzeichnet, daß** beim Erkennen eines für ein Überdrehen typischen Raddrehverhaltens und bei einem Anstieg der Fahrzeugreferenzgeschwindigkeit im unmittelbaren Anschluß an eine Regelbremsung ein ggf. noch andauernder Regelzyklus oder Regelvorgang vorzeitig beendet wird.

**17.** Schaltungsanordnung zur Steuerung einer blockiergeschützten Bremsanlage für Kraftfahrzeuge,

- mit Sensoren zur Erzeugung von dem Drehverhalten der Fahrzeugräder entsprechendem elektrischen Signalen (VR1-VR4),
- mit Schaltkreisen (E1-E4, 16-20) zur Aufbereitung, Verarbeitung und logischen Verknüpfung der Sensorsignale und zur Erzeugung von Bremsdruck-Steuersignalen in Abhängigkeit von dem Schlupf und der Verzögerung oder Beschleunigung der einzelnen Räder,
- mit Schaltkreisen (1) zur Bildung einer Fahrzeugreferenzgeschwindigkeit (vREF) in Abhängigkeit von dem Drehverhalten der Räder und zum Vergleich der momentanen Geschwindigkeit der einzelnen Fahrzeugräder mit der Fahrzeugreferenzgeschwindigkeit, sowie
- mit Schaltmitteln (13, 14) zur Beeinflussung der Regelung beim Auftreten von Überdrehneigungen, wobei
- zum Erkennen von Überdrehneigung Schaltkreisen vorhanden sind, die den Anstieg der Fahrzeugreferenzgeschwindigkeit (vREF) über einen vorgegebenen Grenzwert auswerten,
- wobei beim Erkennen von Überdrehneigungen und Erreichen vorgegebener Startbedingungen, die mindestens erfüllt sind, wenn ein Grenzwert der Fahrzeugreferenzgeschwindigkeit erreicht ist, und diese Tendenz während einer vorgegebenen Zeitspanne andauert, Schaltkreisen (13) vorhanden sind, die eine Umschaltung auf ein zweites Regelkonzept vornehmen,
- wobei das zweite Regelkonzept so lange aufrechterhalten wird und die Regelung bestimmt, bis vorgegebene Austrittsbedingungen eintreten, **gekennzeichnet durch** Schaltkreisen die das Erkennen und/oder das Starten und/oder das Aufrechterhalten des geänderten Regelkonzeptes nach Maßgabe eines ASR-Signals (ASRActive) bestimmen.

18. Schaltungsanordnung nach Anspruch 17, **dadurch gekennzeichnet, daß** die Austrittsbedingungen aus dem zweiten Regelkonzept in einer Phase, bei der aus der ASR-Regelung eine Bremsdruck-Regelung stattfindet, erfüllt sind, wenn mindestens ein Fahrzeugrad an der Hinterachse und/oder ein Fahrzeugrad an der Vorderachse für eine vorgegebene Mindestdauer stabiles Drehverhalten zeigt.

19. Schaltungsanordnung nach Anspruch 17, **dadurch gekennzeichnet, daß** die Austrittsbedingungen aus dem zweiten Regelkonzept in einer Phase, bei der keine Bremsdruck-Regelung stattfindet, erfüllt sind, wenn alle Räder über eine längere Dauer, mindestens 150ms, in einem Geschwindigkeitsband, maximal 5%, oder einem Beschleunigungsband, maximal ±06 g, liegen.

20. Schaltungsanordnung nach einem der Ansprüche 17 bis 19, **dadurch gekennzeichnet, daß** die Änderung des Regelkonzeptes nach einem ASR-Motorregelung erfolgt.

21. Schaltungsanordnung nach einem der Ansprüche 17 bis 20, **dadurch gekennzeichnet, daß** der Start-Grenzwert in die ASR-Motorregelung in einem Bereich zwischen 1 km/h und 2 km/h liegt.

22. Schaltungsanordnung nach einem der Ansprüche 17 bis 21, **dadurch gekennzeichnet, daß** diese einen digitalen Zähler als gegengekoppelten Integrator (8) besitzt, der, sobald die Startbedingungen erfüllt sind, in Lauf gesetzt wird und der den Anstieg, d.h. den Differentialquotienten (bREF) der Fahrzeugreferenzgeschwindigkeit (vREF) mit einer vorgegebenen Zeitkonstanten integriert oder, der beim Erfüllen der Startbedingungen nach Anspruch 21 oder 22 auf einen festen Wert (vREMS), z.B. auf 10 km/h, gesetzt wird.

23. Schaltungsanordnung nach Anspruch 22, **dadurch gekennzeichnet, daß** beim Austritt aus der ASR-Regelung in einer Phase, bei der keine Bremsdruck-Regelung stattfindet, die Austrittsbedingungen aus dem zweiten Regelkonzept erfüllt sind, wenn die ASR-Regelung einen Austritts-Grenzwert erreicht oder unterschreitet.

**Claims**

1. Method for controlling an anti-lock braking system, intended for motor vehicles having all-wheel drive, wherein electric signals (VR1-VR4) representative of the rotational behavior of the vehicle wheels are produced, from which electric signals, after electronic processing and logical combining, braking pressure control signals are derived by which, when a locking tendency occurs, the braking pressure is decreased or maintained constant and re-increased at a given time, and wherein the wheel slip, and the wheel deceleration, and/or the wheel acceleration are evaluated as control criteria, and the individual wheel speed is compared to a vehicle reference speed (vREF) which is produced by taking into account the rotational behavior of all wheels and is used as a reference quantity for controlling the braking pressure of the individual wheels, and wherein further, upon detection of a wheel rotational behavior that is typical of a spinning tendency, a modified control concept is started and maintained until a defined point of time because the instantaneous wheel slip is left out of account as a control criterion for this period and merely the wheel acceleration or the wheel deceleration becomes decisive for braking pressure control,
**characterized in that** the detection, and/or starting, and/or maintaining of the modified control concept is evaluated in accordance with a TCS signal (TCSActive).

2. Method as claimed in claim 1, **characterized in that** the control is determined by the modified control concept, when a braking pressure control operation takes place in this phase starting from the TCS control, until at least one vehicle wheel on the rear axle or front axle shows a stable rotational behavior for a predetermined minimum duration.

3. Method as claimed in claim 1 or 2, **characterized in that** when no braking pressure control is executed in this phase, the modified control concept will be maintained until all wheels lie in a speed range and a wheel acceleration range for a long duration.

4. Method as claimed in claim 3, **characterized in that** the wheel speeds are in a range of 5 %, preferably 3 %, relative to each other for a duration of at least 150 msec, preferably 200 msec.

5. Method as claimed in claim 3, **characterized in that** the filtered wheel accelerations lie in a range of ± 0.6 g, preferably, ± 0.3 g, for a duration of at least 150 msec, preferably 200 msec, wherein 'g' refers to the acceleration due to gravity.

6. Method as claimed in any one of claims 1 to 5, **characterized in that** the variation of the vehicle reference speed (vREF or vREF$_{(TCS)}$) is evaluated to detect a tendency to spinning.

7. Method as claimed in claim 6, **characterized in that** the rise of the vehicle reference speed (vREF) in excess of a predetermined limit value is evaluated to detect a spinning tendency, the said limit value being varied continuously or in steps, preferably in dependence on the variation of the vehicle reference speed (vREF).

8. Method as claimed in any one of claims 1 to 7, **characterized in that** the control concept is modified only after one or more start conditions are fulfilled in the presence of a wheel rotational behavior that is typical of a spinning tendency.

9. Method as claimed in claim 8, **characterized in that** a rise of the vehicle reference speed (vREF) in excess of a predetermined limit value and continuation of this tendency during a predetermined minimum time and an entry into TCS engine control are chosen as start conditions.

10. Method as claimed in claim 8, **characterized in that** an entry into TCS engine control is chosen as a start condition.

11. Method as claimed in claim 9 or 10, **characterized in that** a start limit value of the ABS vehicle reference speed is predefined in the range between 0.1 g and 0.5 g.

12. Method as claimed in claim 9 or 11, **characterized in that** a start minimum time is predetermined in the range between 40 and 200 msec.

13. Method as claimed in any one of claims 1 to 12, **characterized in that** after the re-entry of at least one vehicle wheel into a stable rotational behavior, this wheel will take over the lead in the vehicle reference speed (vREF).

14. Method as claimed in any one of claims 1 to 13, **characterized in that** after the change-over to the modified control concept and signaling of a brake application, upon commencement of the control, the braking pressure reduction is delayed by a predetermined period that depends on the wheel rotational behavior.

15. Method as claimed in claim 14, **characterized in that** depending on the wheel rotational behavior, braking pressure reduction is delayed by e.g. 5 msec to 70 msec, and with a low wheel deceleration, i.e., in the event of a deceleration below 1 to 2g approximately, a shorter delay time, and with a high wheel deceleration a longer delay time, is chosen.

16. Method as claimed in any one of claims 1 to 15, **characterized in that** when a wheel rotational behavior typical of spinning is detected and the vehicle reference speed rises directly following a controlled braking operation, a control cycle or control operation which is still lasting at this time will be terminated prematurely.

17. Circuit arrangement for controlling an anti-lock brake system for motor vehicles,

> - with sensors for generating electric signals (VR1-VR4) representative of the rotational behavior of the vehicle wheels,
> - with circuits (E1-E4, 16-20) for conditioning, processing, and logically combining the sensor signals and for generating braking pressure control signals in dependence on the slip and the deceleration or acceleration of the individual wheels,
> - with circuits (1) for producing a vehicle reference speed (vREF) in dependence on the rotational behavior of the wheels and for comparing the instantaneous speed of the individual vehicle wheels with the vehicle reference speed, and
> - with switching means (13, 14) for influencing the control in the event of tendencies to spinning, wherein
> - for detecting a spinning tendency, circuits are provided, which evaluate the rise of the vehicle reference speed (vREF) in excess of a predetermined limit value, wherein
> - when tendencies to spinning are detected and predetermined start conditions are reached, which are satisfied at least when a limit value of the vehicle reference speed is reached, and this tendency continues to last during a predetermined time period, circuits (13) are provided which perform a change-over to a second control concept, wherein
> - the second control concept is maintained and determines the control until predetermined exit conditions occur,

**characterized by** circuits, which determine the detection, and/or starting, and/or maintaining of the modified control concept according to a TCS signal (TCSActive).

18. Circuit arrangement as claimed in claim 17, **characterized in that** the conditions of exit from the second control concept in a phase where braking pressure control takes place out of the TCS control are satisfied when at least one vehicle wheel at the rear axle and/or one vehicle wheel at the front axle shows a stable rotational behavior for a predetermined minimum duration.

19. Circuit arrangement as claimed in claim 17, **characterized in that** the conditions of exit from the second control concept in a phase of absence of braking pressure control are satisfied when all wheels lie in a speed range, maximally 5 %, and/or an acceleration range, maximally $\pm$ 0.6 g for a long duration, at least 150 msec.

20. Circuit arrangement as claimed in any one of claims 17 to 19, **characterized in that** the variation of the control concept takes place after a TCS engine control.

21. Circuit arrangement as claimed in any one of claims 17 to 20, **characterized in that** the start limit value into the TCS engine control lies in a range between 1 km/h and 2 km/h.

22. Circuit arrangement as claimed in any one of claims 17 to 21, **characterized in that** the said circuit arrangement includes a digital counter that serves as an inverse-coupled integrator (8) and, as soon as the start conditions are satisfied, is set into operation and integrates the rise, i.e. the differential quotient (bREF) of the vehicle reference speed (vREF) with a predetermined time constant, or is set to a fixed value (vREMS), e.g. to 10 km/h, when the start conditions according to claim 21 or 22 are satisfied.

23. Circuit arrangement as claimed in claim 22, **characterized in that** in the event of an exit from the TCS control in a phase of absence of braking pressure control, the conditions of an exit from the second control concept are satisfied when the TCS control reaches or falls below an exit limit value.

## Revendications

1. Procédé de commande d'un système de freinage à antiblocage prévu pour véhicule automobile à quatre roues motrices, dans lequel sont générés des signaux électriques (VR1-VR4) représentant le comportement en rotation des roues du véhicule, à partir desquels sont dérivés, après traitement électronique et fonction logique, des signaux de commande de la pression de freinage au moyen desquels la pression de freinage peut être abaissée ou maintenue constante, à l'apparition d'une tendance au blocage, et à nouveau augmentée à un moment défini, et dans lequel, comme critères de régulation du patinage de roue, sont évalués le ralentissement de roue et/ou l'accélération de roue, la vitesse de roue individuelle étant comparée à une vitesse de référence du véhicule (vREF) qui est formée en tenant compte du comportement en rotation de toutes les roues et sert de grandeur de référence pour la régulation de la pression de freinage des différentes roues, et en outre, en cas de reconnaissance d'un comportement en rotation de roue, caractéristique d'une tendance au patinage, un concept de régulation modifié est lancé et maintenu jusqu'à un instant déterminé, en ce que pendant cet intervalle de temps le patinage de roue momentané n'est pas pris en compte en tant que critère de régulation et seule l'accélération de roue ou le ralentissement est déterminant pour la régulation de la pression de freinage, **caractérisé en ce que** la reconnaissance et/ou le lancement et/ou le maintien du concept de régulation modifié est évalué en fonction d'un signal ASR (ASR Active).

2. Procédé selon la revendication 1, **caractérisé en ce que** du fait du concept de régulation modifié, lorsque dans cette phase a lieu, à partir de la régulation ASR, une régulation de la pression de freinage, la régulation est définie jusqu'à ce qu'au moins une roue du véhicule de l'essieu arrière ou de l'essieu avant fasse preuve d'un comportement stable en rotation pendant une durée minimale prédéfinie.

3. Procédé selon la revendication 1 ou 2, **caractérisé en ce que** le concept de régulation modifié est maintenu, lorsque dans cette phase aucune régulation de la pression de freinage n'a lieu, jusqu'à ce que toutes les roues se trouvent dans une bande de vitesse et une bande d'accélération de roue pendant une durée assez longue.

4. Procédé selon la revendication 3, **caractérisé en ce que** les vitesses de roue se situent les unes par rapport aux autres dans une bande de 5 %, de préférence de 3 %, pendant une durée d'au moins 150 ms, de préférence de 200 ms.

5. Procédé selon la revendication 3, **caractérisé en ce que** les accélérations de roue filtrées pendant une durée d'au moins 150 ms, de préférence de 200 ms, se situent dans une bande de $\pm$ 0,6 g, de préférence $\pm$ 0,3 g, "g" étant la constante d'accélération terrestre.

6. Procédé selon l'une des revendications 1 à 5, **caractérisé en ce que** l'allure de la vitesse de référence de véhicule (vREF ou VREF$_{(ASR)}$) est évaluée pour la reconnaissance d'une tendance au patinage.

7. Procédé selon la revendication 6, **caractérisé en**

**ce que** la montée de la vitesse de référence de véhicule (vREF) au-delà d'une valeur limite prédéfinie, qui est variée de préférence en continu ou par crans en fonction de l'allure de la vitesse de référence de véhicule (vREF), est évaluée pour reconnaître la tendance au patinage.

8. Procédé selon l'une des revendications 1 à 7, **caractérisé en ce que** le concept de régulation n'est modifié, dans le cas d'un comportement de roue caractéristique d'une tendance au patinage, qu'après qu'une ou plusieurs conditions de lancement sont satisfaites.

9. Procédé selon la revendication 8, **caractérisé en ce que** comme conditions de lancement sont choisis un accroissement de la vitesse de référence de véhicule (vREF) au-delà d'une valeur limite prédéfinie et le maintien de cette tendance pendant un intervalle de temps minimum prédéfini ainsi qu'une entrée dans la régulation de moteur ASR.

10. Procédé selon la revendication 8, **caractérisé en ce qu'**une entrée dans la régulation de moteur ASR est choisie comme condition de lancement.

11. Procédé selon la revendication 9 ou 10, **caractérisé en ce qu'**une valeur limite de lancement de la vitesse de référence de véhicule est prédéfinie dans la plage comprise entre 0,1 g et 0,5 g.

12. Procédé selon la revendication 9 ou 11, **caractérisé en ce qu'**un intervalle de temps minimum de lancement est prédéfini dans la plage comprise entre 40 ms et 200 ms.

13. Procédé selon l'une des revendications 1 à 12, **caractérisé en ce qu'**après la rentrée d'au moins une roue de véhicule dans un comportement en rotation stable, cette roue assure le guidage de la vitesse de référence de véhicule (vREF).

14. Procédé selon l'une des revendications 1 à 13, **caractérisé en ce qu'**après commutation sur le concept de régulation modifié et signalisation d'un actionnement de frein lors de l'amorce de la régulation, la réduction de la pression de freinage est temporisée d'un intervalle de temps prédéfini qui dépend du comportement en rotation de roue.

15. Procédé selon la revendication 14, **caractérisé en ce que** la réduction de la pression de freinage est temporisée en fonction du comportement de rotation de roue entre 5 ms et 70 ms, et dans le cas d'un faible ralentissement de roue, c'est-à-dire dans le cas d'un ralentissement au-dessous de 1 à 2 g environ, il est choisi une temporisation plus courte, et dans le cas d'un fort ralentissement de roue une temporisation plus longue.

16. Procédé selon l'une des revendications 1 à 15, **caractérisé en ce que** dans le cas où est reconnu un comportement de rotation de roue caractéristique d'un patinage et dans le cas d'un accroissement de la vitesse de référence de véhicule immédiatement à la suite d'un freinage de régulation, un cycle de régulation encore éventuellement en cours ou processus de régulation est terminé prématurément.

17. Agencement de circuits de commande d'un système de freinage à antiblocage pour véhicule automobile,

   - comportant des capteurs pour générer des signaux électriques (vR1-vR4) correspondant au comportement en rotation des roues de véhicule,
   - comportant des circuits de commande (E1-E4, 16, 20) pour préparer, traiter et pour la combinaison logique des signaux des capteurs et pour générer des signaux de commande de la pression de freinage en fonction du patinage et du ralentissement ou de l'accélération des différentes roues,
   - comportant des circuits de commande (1) pour former une vitesse de référence de véhicule (vREF) en fonction du comportement en rotation des roues et pour comparer la vitesse momentanée des différentes roues du véhicule à la vitesse de référence du véhicule, et
   - comportant des moyens de commutation (13, 14) pour influencer la régulation lors de l'apparition de tendances au patinage, dans lequel
   - pour la reconnaissance d'une tendance au patinage sont prévus des circuits de commande qui évaluent l'accroissement de la vitesse de référence de véhicule (vREF) au-delà d'une valeur limite prédéfinie,
   - dans lequel, en cas de reconnaissance de tendances au patinage et obtention de conditions de lancement prédéfinies, qui sont au moins satisfaites lorsqu'une valeur limite de la vitesse de référence de véhicule est atteinte, et cette tendance dure pendant un intervalle de temps prédéfini, des circuits de commande (13) sont prévus qui procèdent à la commutation sur un second concept de régulation,
   - dans lequel le second concept de régulation est maintenu et définit la régulation jusqu'à ce qu'apparaissent des conditions de sortie prédéfinies,

   **caractérisé par** des circuits de commande qui déterminent la reconnaissance et/ou le lancement et/ou le maintien du concept de régulation modifié en fonction d'un signal ASR (ASR Active).

**18.** Agencement de circuits selon la revendication 17, **caractérisé en ce que** les conditions de sortie du second concept de régulation dans une phase dans laquelle a lieu une régulation de la pression de freinage à partir de la régulation ASR, sont satisfaites lorsqu'au moins une roue de véhicule de l'essieu arrière et/ou une roue de véhicule de l'essieu avant présente un comportement en rotation stable pendant une durée minimum prédéfinie.

**19.** Agencement de circuits selon la revendication 17, **caractérisé en ce que** les conditions de sortie du second concept de régulation dans une phase dans laquelle aucune régulation de la pression de freinage n'a lieu, sont satisfaites lorsque toutes les roues se situent pendant une assez longue durée, au moins 150 ms, dans une bande de vitesse de 5 % au maximum ou une bande d'accélération de $\pm$ 0,6 g au maximum.

**20.** Agencement de circuits selon l'une des revendications 17 à 19, **caractérisé en ce que** la modification du concept de régulation s'effectue selon une régulation de moteur ASR.

**21.** Agencement de circuits selon l'une des revendications 17 à 20, **caractérisé en ce que** la valeur limite de lancement dans la régulation de moteur ASR se situe dans une plage comprise entre 1 km/h et 2 km/h.

**22.** Agencement de circuits selon l'une des revendications 17 à 21, **caractérisé en ce que** celui-ci possède un compteur numérique en tant qu'intégrateur à contre-couplage (8) qui, dès que les conditions de lancement sont satisfaites, est mis en marche et qui intègre l'accroissement, c'est-à-dire le quotient différentiel (bREF) de la vitesse de référence de véhicule (vREF) avec une constante de temps prédéfinie ou qui, lorsque sont satisfaites les conditions de lancement selon la revendication 21 ou 22, est placé sur une valeur fixe (vREMS), par exemple sur 10 km/h.

**23.** Agencement de circuits selon la revendication 22, **caractérisé en ce que** lors de la sortie de la régulation ASR dans une phase dans laquelle aucune régulation de la pression de freinage n'a lieu, les conditions de sortie du second concept de régulation sont satisfaites lorsque la régulation ASR atteint ou sous-dépasse une valeur limite de sortie.

Fig. 1

Fig. 2

Fig. 3

ASR-Motoreingriff

VREMS-Signal

51

112ms

50

Sonderregelungsmodus

Nachlaufzeit

Fig. 4

**EP 1 255 665 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3521960 A1